# NEW EUROPEAN PATENT SPECIFICATION

(11) **EP 2 871 966 B2**
(45) Date of publication and mention of the opposition decision: **21.10.2020**
(45) Mention of the grant of the patent: 08.02.2017
(21) Application number: 13744583.9
(22) Date of filing: 25.06.2013
(51) Int. Cl.: A23C 19/09, A23C 19/04, A23C 19/032, A23C 19/05, A23C 19/06, A23C 19/068

(54) **CHEESE AND PREPARING THE SAME**
KÄSE UND SEINE HERSTELLUNG
FROMAGE ET SA PRÉPARATION

(30) Priority: 27.06.2012 FI 20125736
(43) Date of publication of application: 20.05.2015
(73) Proprietor: Valio Ltd, 00370 Helsinki (FI)
(72) Inventor: UUSI-RAUVA, Janne, FI-00370 Helsinki (FI); KÄRKI, Matti, FI-00370 Helsinki (FI)
(74) Representative: Kolster Oy Ab
(86) International application number: PCT/FI2013/050698
(87) International publication number: WO 2014/001636

(56) References cited:
- EP-A1- 1 902 624
- WO-A1-85/05011
- WO-A1-2011/140649
- JP-A- 2001 275 563
- Anonymous: "Ricotta Cheese", MILKingredients.ca , 17 October 2011 (2011-10-17), XP002717044, Retrieved from the Internet: URL:http://www.milkingredients.ca/index-en g.php?id=190 [retrieved on 2013-11-27]

## Description

### FIELD OF THE INVENTION

The present invention relates to cheese making. More particularly, the invention relates to cheese which can be used as a meat substitute that can be fried or grilled.

### BACKGROUND OF THE INVENTION

The burgeoning demand for meat substitutes can be seen worldwide. Meat substitutes are food products that approximate the aesthetic qualities and/or chemical characteristics of certain types of meat. Meat substitutes include, i.a., various vegetarian products, such as soybean flour, soybean sausages, tofu, tempeh, quorn, or meatless-based alternatives, such as minced soy protein TSP (textured soy protein), or bean curd, etc. The meat substitute does not contain meat or any component of meat origin but can be used as meat, like fried.

There are cheeses in the market which can be fried and grilled. A typical example of such cheeses is called Halloumi. Halloumi is semi-hard, unripened brined cheese made from a mixture of goat and sheep milk, sometimes also cow's milk. Halloumi is prepared by a conventional cheese making process wherein milk raw material is standardized in respect of fat and protein contents, heat treated and bactofugated. The treated milk raw material is then coagulated with a rennet to a coagulum. The coagulum is cut to form a whey-curd mixture. The whey curd mixture is then scalded at a temperature of 30 to 55°C under stirring for 20 to 40 minutes. Whey is drained from the curd mixture, the curd is cooled and moulded to solid cheese. The moulded solid cheese is cooked typically in whey, brine, water or a mixture of these at 90 to 92°C for 30 to 60 minutes. After cooking, Halloumi is cooled (30°C), dry salted and packed.

Conventional cottage cheese is typically made with acid coagulation without a rennet or with a small amount of a rennet. Cheese is typically acidic (pH 4.4-4.9). In the preparation, milk raw material is preheated in a conventional manner and then coagulated with an acid. After coagulation, the coagulum is cutted to form a whey-curd mixture. The mixture is typically scalded at a temperature of 45 to 55°C under stirring for 60 to 120 minutes. Whey is separated from the curd mixture. The curd is cooled, washed, standardized (fat, salt) with a dressing, and packed.

Mozzarella is Pasta Filata type, semi-soft, "elastic" fresh cheese. In Mozzarella manufacturing process, a cheese curd is made with a rennet and a Mozzarella starter. Whey is separated from the cheese curd, the curd is pressed and, if necessary, cheddared until a suitable pH, typically about 5.2-5.6, is achieved. Cheese is then milled to small pieces, heated and kneaded in whey at about 70°C to a smooth plastic mass. The mass is moulded and cooled to provide Mozzarella. Mozzarella has a pH of 4.7-5.6.

### BRIEF DESCRIPTION OF THE INVENTION

It is an object of the present invention to provide cheese grains which can be eaten as such like salad cheese, or fried and grilled like meat or minced meat, and a method for its preparation. Outer appearance of the cheese grains of the invention is similar to that of cottage cheese. The texture of the cheese grains gives "mouth feel" and is slightly elastic. The cheese grains of the invention differ from the conventional cottage cheese in that they do not melt and clump together and do not scorch onto frying ware when fried whereas cottage cheese melt into solid chewy mass in frying. Without wishing to be bound by theory, it is believed that poor frying stability of conventional cottage cheeses results from a low content of calcium and phosphate retained in the cottage cheese due to the acid coagulation. In the present invention, cheese grains are obtained by a coagulant wherefore a major portion of original calcium and phosphate retains in cheese and casein is in a micellar form. A high content of calcium and phosphate in cheese has a beneficial effect on frying stability of the cheese grains of the invention. Further, it is believed that scalding of the cheese curd at a high temperature alters the outer surface and the structure of the cheese grains in a favourable manner to render the cheese grains stable for frying.

It was surprisingly found in the present invention that when a cheese curd is scalded at higher temperatures than normally used in cottage cheese and Halloumi processes, a mixture of whey and separate cheese grains is obtained and after whey separation and optional washing, cooling and salting, the cheese grains are stable for frying and can be eaten as such, fried or used as a meat substitute such as minced meat. Conventional Halloumi process does not provide separate cheese grains but rather a solid uniform cheese mass is formed under whey separation.

In an aspect, the invention provides a method for producing cheese grains, comprising the steps of:
- providing a raw material,
- subjecting the raw material to a coagulation step, wherein a coagulant comprising a milk clotting enzyme is added to the raw material to form a coagulum,
- cutting the coagulum to form a curd mixture of cheese grains and whey,
- subjecting the curd mixture to a scalding step, wherein the temperature of the curd mixture is raised to a range from about 70°C to about 80°C under stirring to form a scalded mixture,
- separating whey from the scalded mixture to provide cheese in form of grains having a protein content of about 10% to about 23%, pH of about 6 to about 7 and a Ca/protein ratio of 18 to 35 mg/g, specifically 30 to 32 mg/g.

### BRIEF DESCRIPTION OF THE DRAWINGS

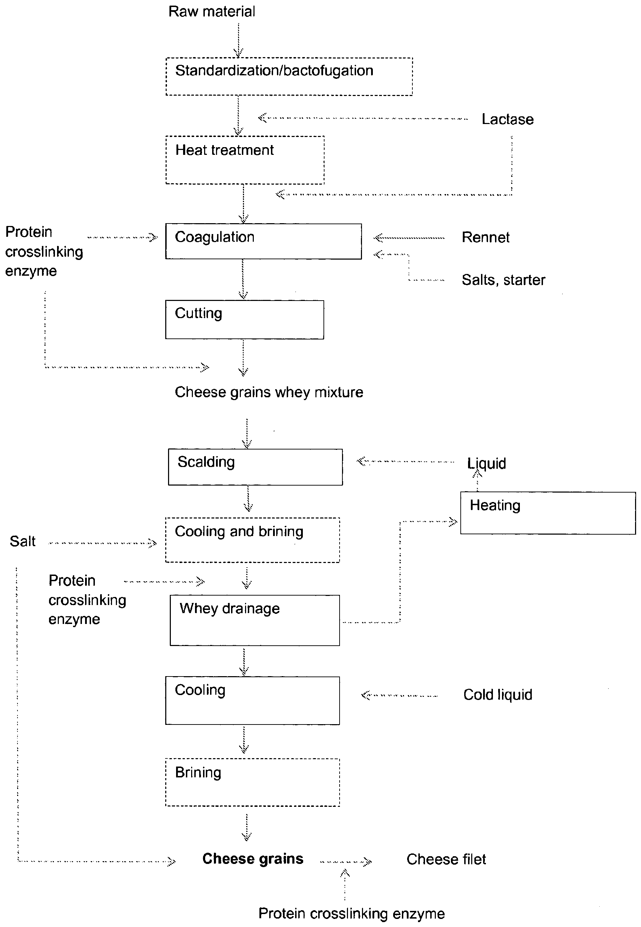

Figure 1 is a flow chart showing some embodiments of the method of the present invention.

### DETAILED DESCRIPTION OF THE INVENTION

In an aspect, the invention provides a method for producing cheese grains, comprising the steps of:
- providing a raw material,
- subjecting the raw material to a coagulation step, wherein a coagulant comprising a milk clotting enzyme is added to the raw material to form a coagulum,
- cutting the coagulum to form a curd mixture of cheese grains and whey,
- subjecting the curd mixture to a scalding step, wherein the temperature of the curd mixture is raised to a range from about 70°C to about 80°C under stirring to form a scalded mixture,
- separating whey from the scalded mixture to provide cheese in form of grains having a protein content of about 10% to about 23%, pH of about 6 to about 7 and a Ca/protein ratio of 18 to 35 mg/g, specifically 30 to 32 mg/g.

In the present invention,
the term "cheese" also encompasses cheese-like products. In the cheese-like products, milk fat and/or protein is replaced by another suitable fat or protein, or both, partly of completely. Typically, milk fat is replaced by vegetable fat, such as rapeseed oil, fractioned palm oil or coconut oil. Also, lard can be used for replacement of milk fat. Milk protein can be replaced by vegetable protein, like soybean protein;
the term "raw material" may be milk as such obtained from an animal, such as a cow, sheep, goat, camel, mare or any other animal that produces milk suitable for human consumption, or pre-processed as desired to adjust protein, fat and/or lactose content to a desired level.

For example, the raw material can be standardized in respect of the fat content, and if desired, of the protein content in a manner generally known in the art. The fat content of the standardized milk is typically in the range of 0.05 to 10%, specifically 1.0 to 3.0%. Further, the raw material can be pre-treated in order to lower its microbial load in a manner generally known in the art. Pathogenic and spoilage microorganisms removal is generally carried out by physical separation such as microfiltration, bactofugation or a combination thereof.

The raw material, optionally standardized (fat, protein and/or lactose) and/or pretreated for microbial removal (microfiltration or bactofugation), can be heat treated prior to coagulation. Examples of suitable heat treatments include pasteurization, high pasteurization, or heating at a temperature lower than the pasteurization temperature for a sufficiently long time. Specifically, UHT treatment (e.g. milk at 138°C, 2 to 4 s), ESL treatment (e.g. milk at 130°C, 1 to 2 s), pasteurization (e.g. milk at 72°C, 15 s), thermisation (e.g. at 65°C, 2 s to 3 min) and high pasteurization (95°C, 5 min) can be mentioned. The heat treatment can be either direct (vapor to milk, milk to vapor) or indirect (tube heat exchanger, plate heat exchanger, scraped-surface heat exchanger).

If desired, the lactose content of the raw material liquid can be reduced. In an embodiment, lactose content is reduced enzymatically by adding a lactase to the raw material. Lactases typically used in the lactose hydrolysis of milk can be used. The lactose content can also be reduced by other suitable means generally known in the art, such as by means of membrane filtration, chromatography or precipitation. Various techniques can be combined in an appropriate manner. In an embodiment, a low-lactose raw material liquid is composed of various fractions obtained from membrane filtrations, such as microfiltration and ultrafiltration of milk, whereby the lactose and protein contents can appropriately be adjusted to a desired level. The low lactose raw material can then further be lactose hydrolyzed to provide a lactose-free raw material.

If desired, the protein content of the raw material can be increased. This can be suitably carried out by using membrane filtrations, such as ultrafiltration. The protein content can vary within the range of about 3% to about 6%. Also, the native whey to casein ratio can be adjusted. In cheesemaking, it is appropriate to increase the casein content in the raw material.

In the present invention, the raw material can thus be, for instance, full-fat (whole) milk, cream, low fat milk, skim milk, buttermilk, colostrum, low-lactose milk, lactose-free milk, whey protein depleted milk, reconstituted (recombined) milk made from caseinates, milk powder and water, or a combination thereof as such or as a concentrate and pre-treated as described above, such as heat-treated. The raw material can contain fat and/or protein of vegetable origin.

Various ingredients typically used in cheesemaking can be incorporated in the raw material. For example, fat, protein and salt, such as CaCl₂, can be added. Also, an acidifier, such as a starter, an organic or inorganic acid, an acidogen, for example GDL, can be included. In an embodiment of the method of the invention, a starter is used with a milk clotting enzyme. In an embodiment of the method of the invention, a starter is added first followed by the addition of a milk clotting enzyme. In another embodiment, a starter and a milk clotting enzyme are added simultaneously. In an embodiment of the invention, the raw material is non-acidified.

Different starters and starter mixtures may be used. The most common starters include a mesophilic starter (lactococcal starter), typically starters by Christian Hansen or Danisco, and a taste imparting adjunct (mesophilic and/or thermophilic adjunct starter), typically thermophilic Valio Lb 161 (shocked/non-shocked). For example, a mesophilic 0-starter, R-608 or CHN19 by Christian Hansen, is used as a starter. The starter and its amount depend on the cheese type and the conditions used. It is known that the amount of bulk starter is usually 0.5 to 2%, typically 0.7 to 0.8%. The amount of DVS starter (DVS/DVI) is usually 0.001 to 0.2%, typically 0.01 to 0.05%. In addition to a bulk starter, the method of the invention may use, for example, LH-32, BS-10 and CR-312 by Christian Hansen as such or in different combinations and amounts depending on the cheese and cheese-like product to be made as additional starters to impart taste. Alternatively, taste imparting adjunct starters may be added substantially simultaneously with other ingredients.

The raw material, optional standardized and pretreated as described above, is subjected to a coagulation step in order to provide a coagulum. Coagulation, i.e., simultaneous clotting and gel forming, is carried out in a manner as generally known in the art. Typically, a milk coagulant (milk clotting enzyme), such as a rennet or chymosin is added to the raw material, and the raw material is coagulated at 30°C to 45°C for about 15 to 60 minutes in a cheese vat. Other physical coagulation methods including high pressure treatment or heating, and simultaneous use of chemical coagulation are also possible. In the simultaneous chemical coagulation, an acidifier or ferment such as starter are suitable for use in the present invention.

Any milk clotting enzyme preparation generally used in cheesemaking, chymosin, pepsin, or enzymes produced by microbes *Rhizomucor miehei* (Hannilase) or *Cryphonectria (Endothia) parasitica* (Suparen), for example, can be used as a rennet. In an embodiment of the invention, a rennet is used as a sole coagulant. In another embodiment, a combination of a rennet and a starter is used as a coagulant.

The coagulum is cut to a grain size having a diameter of about 1 cm. Stirring for a period of 5 to 180 minutes, specifically 5 to 30 minutes, provides a loose mixture of cheese grains and whey. A portion of the whey can be removed from the mixture.

The curd mixture of cheese grains and whey is then subjected to a scalding step where the temperature of the mixture is raised to a range from about 70°C to about 80°C, more specifically to about 75°C. The temperature of the curd mixture can be raised directly, for example, by adding warm liquid or steam to the curd mixture, or indirectly through the cheese vat casing. Scalding is carried out for about 5 to about 180 minutes. In an embodiment, the curd is heated by a jacket, 0.2-1°C/min using variable rate. After the temperature of 75°C is reached, the heating is stopped indicating that a total scalding time is approximately 70 to 110 minutes. If necessary, liquid can be added to the curd mixture in order to keep the cheese grains separate from each other. Liquid can be water, brine, whey, a milk-based permeate obtained from a membrane filtration of milk, typically containing lactose and milk minerals, or a mixture thereof. The scalding step can be carried out in a cheese vat. Also, whey can be separated from the curd mixture, and the cheese grains can then be led to a scalding vessel/vat. Liquid(s) mentioned above can be added to the cheese grains.

In an embodiment of the invention, the coagulation step, cutting the coagulum to form a curd mixture and the scalding step, i.e. curd formation, cutting/stirring and heating, are performed in a cheese vat.

If desired, the scalded mixture of cheese grains and whey can be cooled. In an embodiment, the mixture is cooled to a temperature of about 30°C to about 55°C. Cooling can be performed in cheese vat by means of cold water, whey or brine, or through a jacket, or a combination thereof, or any other suitable method.

Whey is separated from the scalded mixture, optionally cooled, to provide cheese grains. Whey can be separated with a drainage drum, belt, vibrating sieve, triangular wire or any suitable drainage equipment used for cheesemaking.

If desired, the cheese grains can be cooled in a manner as described above, or in a cooling tower or tunnel (for example nitrogen tunnel) or a combination thereof. The cheese grains can further be packed and cooled after packaging. In an embodiment, the cheese grains are cooled to a temperature of about 2°C to about 9°C.

- If desired, the cheese grains can be brined or salted with dry salt and spiced. Brining or salting with dry salt and spicing can be performed also before the whey separation. Salt can be NaCl, KCl or a milk-based mineral product (dry or liquid, concentrate, brine), or a mixture thereof. The milk-based mineral product refers to, for example, a salt described in publication EP 1061811 B1, i.e. a milk mineral powder known as trademark Valio Milk Mineral Powder VMMP (Valio Oy). Other feasible milk-based mineral products include trademarks such as Capolac® MM-0525 BG (Aria Foods Ingredients), Vitalarmor CA (Armor Proteins) and Sodidiet 40 MI (Sodiaal Industrie).

Cheese in the form of grains is achieved which can be consumed as such or heated, fried, grilled or cooked.

The moisture on a fat-free basis (MFFB) of the cheese grains achieved by the inventive process is in the range of about 65% to about 85%. In an embodiment, MFFB is in the range of about 70% to about 80%.

Different cheese types have a various amount of calcium that influences the properties of the final cheese. Typical calcium contents for some cheese types are given in Table 1 below. The harder the cheese the more calcium it contains.

**Table 1. Calcium contents of cheeses**

| Variety | Protein (%) | Ca (%) | Ca:Protein (mg g⁻¹) |
|---|---|---|---|
| Cottage | 15 | 0.08 | 5.4±0.5 |
| Camembert | 22 | 0.40 | 18.2±0.5 |
| Edam | 25 | 0.75 | 29.4±0.9 |
| Cheddar | 25 | 0.80 | 31.5±0.5 |
| Gouda | 25 | 0.82 | 32.2±0.7 |
| Emmental | 27 | 0.92 | 33.1±0.9 |

The Ca/protein ratio has an influence on the frying ability on the cheese grains of the present invention. Generally, the higher the Ca/protein ratio, the better the frying stability of the cheese is. The Ca/protein ratio of the cheese grains of the invention is in the range of about 18 to about 35 mg/g. In an embodiment, the Ca/protein ratio is about 30 to about 32 mg/g.

The calcium content of the cheese grains is about 0.2% to about 1.0%. In an embodiment, the calcium content is about 0.5% to about 0.6%.

The fat content of the cheese grains can vary within a range of about 0% to about 30%, specifically about 5% to about 15%. The protein content of the cheese grains can vary in the range of about 10% to about 35%. In an embodiment, the protein content is about 10% to about 23%. In another embodiment, the protein content is about 15% to about 20%. The salt content of the cheese grains ranges from about 0% to about 6%, specifically from 0.5% to 3%.

The lactose content of the cheese grains can vary within the range of about 0% to about 2%.

The pH of the cheese grains is at least about 6. In an embodiment, the pH is in the range of about 6 to about 7. If also a starter is used in the method of the invention, the pH of the cheese grains is typically in the range of about 5 to about 6.5. In an embodiment, the pH of cheese grains is about 6.1 to about 6.5.

The cheese grains prepared by the method of the invention can further be processed to a compact filet form, for example, by pressing the grains together. The cheese filets can then be brined, cooled and packed. In an embodiment, a protein crosslinking enzyme, such as transglutaminase, laccase, tyrosinase, peroxidase, sulfhydryl oxidase, glucose oxidase, protein-glutaminase, etc., or a mixture thereof, is added in order to enhance the attachment of cheese grains together. In an embodiment, the temperature of the cheese grains is adjusted to a level that is suitable for the activity of the enzyme. The enzyme is typically used in an amount of 0.2 to about 10U enzyme/g protein, specifically about 3U enzyme/g protein. The enzyme can also be added to the curd mixture before separation of whey from the curd mixture.

In an embodiment, the protein crosslinking enzyme is transglutaminase. Transglutaminase can be any transglutaminase commonly used in dairy industry. It can be derived from a microbial source, fungus, mould, fish and a mammal. In an embodiment of the invention, transglutaminase is isolated from a microbial source. There are several commercially available transglutaminase enzyme preparations that are suitable for use in the method of the invention. These include Activa^{®}YG (Ajinomoto, Japan), Activa^{®}MP (Ajinomoto, Japan), and Yiming-TG (Yiming Fine Chemicals Co., Ltd., China). Optimum conditions depend on the enzyme used and they can be obtained from the manufactures of the commercial enzymes.

The method of the invention can be performed either continuously or as a batch method. The volume of a batch may vary depending on general conditions and available means. The method of the invention is preferably carried out continuously.

Figure 1 illustrates a generic process of the invention. The raw material is subjected in unidirectional flow to coagulation, cutting, scalding, cooling and whey drainage steps to form cheese in a grain form. The dash line illustrates optional embodiments of the invention. Thus, the raw material can be standardized/bactofugated and heat-treated prior to coagulation. Salt, starter and lactase can be added to the raw material. Lactase can also be added after standardization and/or after heat treatment. Liquid can be added to a curd mixture of cheese grains and whey in the scalding step. The cheese grains can be washed, brined and spiced.

The cheese grains obtained by the method can be pressed to cheese filet. In an embodiment, a protein crosslinking enzyme is added to the cheese grains or to a curd mixture before whey separation to enhance the file formation.

It is disclosed cheese having the moisture on a fat-free basis (MFFB) of about 65% to about 85%, a protein content of about 10% to about 23% and a pH of about 6 to about 7. In an embodiment, MFFB is in the range of about 70% to about 80%.

The Ca/protein ratio of the cheese of the disclosure is in the range of about 18 to about 35 mg/g. In an embodiment, the Ca/protein ratio is about 30 to about 32 mg/g.

The calcium content of the cheese is about 0.2% to about 1.0%. In an embodiment, the calcium content is about 0.5% to about 0.6%.

The fat content of the cheese can vary within a range of about 0% to about 30%, specifically about 5% to about 15%. The protein content of the cheese can vary in the range of about 10 to about 35%. In an embodiment, the protein content is about 10% to about 23%. In another embodiment, the protein content is about 15% to about 20%. The salt content of the cheese ranges from about 0% to about 6%, specifically from 0.5% to 3%.

The cheese of the disclosure can be in form of grains or as a compact uniform block.

### EXAMPLES

### Example 1

Raw milk is partially-skimmed and the fat-protein ratio is standardized to a ratio of 0.4-1.0. The standardized raw milk is pasteurized at 72°C for 15 s and cooled to a coagulating temperature of 32°C. 0.03-0.06% by weight of CaCl₂ and a suitable milk clotting enzyme is added (0.01-0.05%, for example Chr. Hansen Chy-max E). After coagulation (20-40 min), the coagulum is cutted to form cubes with a size of 1 cm³ and mixed gently to promote whey separation. The stirring continues for about 10-30 min. The stirring is further continued and the curd is heated by a jacket, 0.2-1°C/min using variable rate. After the temperature of 75°C is reached, the heating is stopped and the curd is pumped to a whey separation vessel. Cheese grains are cooled in the same vessel with cold water (2-7°C) to reach the packaging temperature (5-7°C). A part of the cooling water is separated, the cheese grains are brined for 30 to 45 min, brine is separated and the cheese grains having a pH of about 6.1 to about 6.9 are packed to cups. Cheese having a Ca/protein ratio of 30 to 32 mg/g, calcium content of 0.5 to 0.6% (500 to 600 mg/100g) and a protein content of 15 to 20% is obtained.

### Example 2

Raw milk is partially-skimmed and the fat-protein ratio is standardized to a ratio of 0.4-1.0. The standardized raw milk is pasteurized at 72°C for 15 s and cooled to a coagulating temperature of 32°C. Mesophilic starter (0.5-1.0%, for example CHN19) is added. 0.03-0.06% by weight of CaCl₂ and a suitable milk clotting enzyme is added (0.01-0.05%, for example Chr. Hansen Chy-max E). After coagulation (20-40 min), the coagulum is cutted to form cubes with a size of 1 cm³ and mixed gently to promote whey separation. The stirring continues for about 60-180 min. pH of 5.5-6.3 is reached. The stirring is continued and the curd is heated by a jacket, 0.2-1°C/min using variable rate. After the temperature of 75°C is reached, the heating is stopped, and the curd is pumped to a whey separation vessel. Cheese grains are cooled in the same vessel with cold water (2-7°C) to reach the packaging temperature (5-7°C). Cooling water is separated and the cheese grains having a pH of about 6.1 to about 6.5 are packed to cups. Cheese having a Ca/protein ratio of 20 to 30 mg/g, calcium content of 0.3 to 0.55% (300 to 550 mg/100g) and a protein content of 15 to 20% is obtained.

### Example 3

Raw milk is partially-skimmed and the fat-protein ratio is standardized to a ratio 0.4-1.0. The standardized raw milk is pasteurized at 72° for 15 and cooled to a coagulating temperature of 32°C. 0.03-0.06% by weight of CaCl₂ and a suitable milk clotting enzyme is added (0.01-0.05%, for example Chr. Hansen Chy-max E). After coagulation (20-40 min), the coagulum is cutted to form cubes with a size of 1 cm³ and mixed gently to promote whey separation. The stirring continues for about 10-30 min. 2-3U/g protein of a crosslinking enzyme, for example transglutaminase (Activa®MP), is added.

The stirring is continued and the curd is heated by a jacket, 0.2-1°C/min using variable rate. After the temperature of 75°C is reached, the heating is stopped, and the curd is pumped to a whey separation vessel. Cheese grains are cooled in the same vessel with cold water (2-7°C) to reach the packaging temperature (5-7°C). Cooling water is separated and the cheese grains having a pH of about 6.1 to about 6.9 are packed to cups. Cheese having a Ca/protein ratio of 30 to 32 mg/g, calcium content of 0.5 to 0.6% (500 to 600 mg/100g) and a protein content of 15 to 20% is obtained.

### Example 4

Raw milk is partially-skimmed and the fat-protein ratio is standardized to a ratio of 0.4-1.0. The standardized raw milk is pasteurized at 72°C for 15 s and cooled to a coagulating temperature of 32°C. Mesophilic starter (0.5-1.0%, for example CHN19) is added. 0.03-0.06% by weight of CaCl₂ and a suitable milk clotting enzyme is added (0.01-0.05%, for example Chr. Hansen Chy-max E). After coagulation (20-40 min), the coagulum is cutted to form cubes with a size of 1 cm³ and mixed gently to promote whey separation. The stirring continues for about 60-180 min. pH of 5.5-6.3 is reached. 2-3U/g protein of a crosslinking enzyme, for example transglutaminase (Activa®MP), is added.

The stirring is continued and the curd is heated by jacket, 0.2-1°C/min using variable rate. After the temperature of 75°C is reached, the heating is stopped, and the curd is pumped to a whey separation vessel. Cheese grains are cooled in the same vessel with cold water (2-7°C) to reach the packaging temperature 5-7°C). A part of the cooling water is separated, the cheese grains are brined for 30 to 45 min, brine is separated and the cheese grains having a pH of about 6.1 to about 6.5 are packed to cups. Cheese having a Ca/protein ratio of 20 to 30 mg/g, calcium content of 0.3 to 0.55% (300 to 550 mg/100g) and a protein content of 15 to 20% is obtained.

### Example 5

Raw milk is skimmed or partially-skimmed and the fat-protein ratio is standardized to a ratio of 0.01-0.35. The standardized raw milk is pasteurized at 72°C for 15 s and cooled to a coagulating temperature of 32°C. 0.03-0.06% by weight of CaCl₂ and a suitable milk clotting enzyme is added (0.01-0.05%, for example Chr. Hansen Chy-max E). After coagulation (20-40 min), the coagulum is cutted to form cubes with a size of 1 cm³ and mixed gently to promote whey separation. The stirring continues for about 10-30 min. The stirring is further continued and the curd is heated by a jacket, 0.2-1°C/min using variable rate. After the temperature of 75°C is reached, the heating is stopped and the curd is pumped to a whey separation vessel. Cheese grains are cooled in the same vessel with cold water (2-7°C) to reach the packaging temperature (5-7°C). The cooling water is separated, salt is added to the cheese grains and the salted cheese grains having a pH about 6.1 to about 6.7 are packed to cups. Cheese having a Ca/protein ratio of 30 to 32 mg/g, calcium content of 0.6 to 0.8% (600 to 800 mg/100g) and a protein content of 21 to 23% is obtained.

### Example 6

Raw milk is partially skimmed and the fat-protein ratio is standardized to a ratio of 0.5-1.0. The standardized raw milk is pasteurized at 72°C for 15 s and cooled to a coagulating temperature of 32°C. 0.03-0.06% by weight of CaCl₂ and a suitable milk clotting enzyme is added (0.01-0.05%, for example Chr. Hansen Chy-max E). After coagulation (20-40 min), the coagulum is cutted to form cubes with a size of 1 cm³ and mixed gently to promote whey separation. The stirring continues for about 10-30 min. The stirring is further continued and the curd is heated by a jacket, 0.2-1°C/min using variable rate. After the temperature of 75°C is reached, the heating is stopped and the curd is pumped to a whey separation vessel. Cheese grains are cooled in the same vessel with cold water (2-7°C) to reach the packaging temperature (5-7°C). The cooling water is separated, salt is added to the cheese grains and the salted grains having a pH about 6.2 to about 6.5 are packed to cups. Cheese having a Ca/protein ratio of 30 to 32 mg/g, calcium content of 0.3 to 0.45% (300 to 450 mg/100g) and a protein content of 10 to 14% is obtained.

## Claims

1. A method for producing cheese grains, comprising the steps of:
- providing a raw material,
- subjecting the raw material to a coagulation step, wherein a coagulant comprising a milk clotting enzyme is added to the raw material to form a coagulum,
- cutting the coagulum to form a curd mixture of cheese grains and whey,
- subjecting the curd mixture to a scalding step, wherein the temperature of the curd mixture is raised to a range from 70°C to 80°C under stirring to form a scalded curd mixture,
- separating whey from the scalded mixture to provide cheese in the form of grains having a protein content of 10% to 23%, pH of 6 to 7 and a Ca/protein ratio of 18 to 35 mg/g, specifically 30 to 32 mg/g.

2. The method of claim 1, wherein a starter is used in the coagulation step.

3. The method of claim 1 or 2, wherein the milk clotting enzyme is a rennet.

4. The method of any one of the preceding claims, wherein the coagulation step is performed at a temperature of 30 to 45°C for 15 to 60 minutes.

5. The method of any one of the preceding claims, wherein the scalding step is performed for 5 to 180 minutes.

6. The method of any one of the preceding claims, wherein a liquid is added to the curd mixture in the scalding step, wherein the liquid is water, cheese whey, a permeate obtained from membrane filtration of milk, such as an ultrafiltration permeate, and a mixture thereof.

7. The method of any one of the preceding claims, wherein the raw material is heat treated.

8. The method of any one of the preceding claims, wherein the raw material is a casein concentrate.

9. The method of any one of the preceding claims, wherein salt is added to the raw material.

10. The method of any one of the preceding claims, wherein salt is added before packaging of the cheese grains.

11. The method of any one of the preceding claims, further comprising a cooling step after the scalding step or after the whey separation or both.

12. The method of claim 11, wherein the scalded curd mixture is cooled to 30°C to 55°C after the whey separation.

13. The method of any one of the preceding claims, wherein a protein crosslinking enzyme, such as transglutaminase, in an amount of 0.2 to 10U enzyme/g protein, specifically 3U enzyme/g protein, is added to the curd mixture prior to the scalding step.

14. The method of any one the preceding claims, wherein a protein crosslinking enzyme, such as transglutaminase, in an amount of 0.2 to 10U enzyme/g protein, specifically 3U enzyme/g protein, is added to the cheese grains.

## Patentansprüche

1. Verfahren zur Herstellung von Käsebruchkörnern, das die Stufen:
- Bereitstellen eines Ausgangsstoffs,
- Unterwerfen des Ausgangsstoffs einer Ausfällungsstufe, wobei dem Ausgangsstoff in ein Milchgerinnungsenzym umfassendes Gerinnungsmittel zugegeben wird, um ein Koagulat zu bilden,
- Zerschneiden des Koagulats, um ein Käsebruchgemisch aus Käsebruchkörnern und Molke zu bilden,
- Unterwerfen des Käsebruchgemischs einer Brennstufe, worin die Temperatur des Käsebruchgemischs unter Rühren auf 70 °C bis 80 °C erhöht wird, um erwärmtes Käsebruchgemisch zu bilden, und
- Abtrennen der Molke von dem erwärmten Käsebruchgemisch, um Käse in Form von Körnern mit einem Proteingehalt von 10 % bis 23 %, einem pH-Wert von 6 bis 7 und einem Ca/Protein-Verhältnis von 18 bis 35 mg/g, insbesondere 30 bis 32 mg/g bereitzustellen,
umfasst.

2. Verfahren nach Anspruch 1, wobei in der Ausfällungsstufe ein Starter verwendet wird.

3. Verfahren nach Anspruch 1 oder 2, wobei das Milchgerinnungsenzym Lab ist.

4. Verfahren nach einem der vorhergehenden Ansprüche, wobei die Ausfällungsstufe 15 bis 60 Minuten lang bei einer Temperatur von 30 bis 45 °C durchgeführt wird.

5. Verfahren nach einem der vorhergehenden Ansprüche, wobei die Brennstufe 5 bis 180 Minuten lang durchgeführt wird.

6. Verfahren nach einem der vorhergehenden Ansprüche, wobei in der Brennstufe dem Käsebruchgemisch eine Flüssigkeit, die Wasser, Käsemolke, ein aus der Membranfiltration der Milch erhaltenes Permeat wie ein Ultrafiltrationspermeat und ein Gemisch davon ist, zugegeben wird.

7. Verfahren nach einem der vorhergehenden Ansprüche, wobei der Ausgangsstoff wärmebehandelt ist.

8. Verfahren nach einem der vorhergehenden Ansprüche, wobei der Ausgangsstoff ein Caseinkonzentrat ist.

9. Verfahren nach einem der vorhergehenden Ansprüche, wobei dem Ausgangsstoff Salz zugegeben worden ist.

10. Verfahren nach einem der vorhergehenden Ansprüche, wobei den Käsebruchkörnern vor dem Verpacken Salz zugegeben wird.

11. Verfahren nach einem der vorhergehenden Ansprüche, welches zusätzlich nach der Brennstufe oder der Molkeabtrennung oder beidem eine Kühlstufe umfasst.

12. Verfahren nach Anspruch 11, wobei das erwärmte Käsebruchgemisch nach der Molkeabtrennung auf 30 bis 55 °C abgekühlt wird.

13. Verfahren nach einem der vorhergehenden Ansprüche, wobei vor der Brennstufe dem Käsebruchgemisch ein Proteinvernetzungsenzym wie Transglutaminase mit einem Anteil von 0,2 bis 10 U Enzym/g Protein und insbesondere 3 U Enzym/g Protein zugegeben wird.

14. Verfahren nach einem der vorhergehenden Ansprüche, wobei den Käsebruchkörnern ein Proteinvernetzungsenzym wie Transglutaminase mit einem Anteil von 0,2 bis 10 U Enzym/g Protein und insbesondere 3 U Enzym/
g Protein zugegeben wird.

## Revendications

1. Procédé de fabrication de grains de fromage, comprenant les étapes suivantes :
- apport d'une matière première,
- exposition de la matière première à une étape de coagulation, un coagulant comprenant une enzyme de coagulation du lait étant ajouté à la matière première pour former un coagulum,
- découpe du coagulum pour former un mélange caillé de grains de fromage et de lactosérum,
- exposition du mélange caillé à une étape de chauffage, la température du mélange caillé étant augmentée dans une plage de 70 °C à 80 °C sous agitation pour former un mélange caillé chauffé,
- séparation du lactosérum du mélange chauffé pour obtenir un fromage sous la forme de grains ayant une teneur en protéines de 10 % à 23 %, un pH de 6 à 7 et un rapport Ca/protéine du fromage de 18 à 35 mg/g, en particulier 30 à 32 mg/g.

2. Procédé selon la revendication 1, dans lequel une souche est utilisée dans l'étape de coagulation.

3. Procédé selon la revendication 1 ou 2, dans lequel l'enzyme de coagulation du lait est une présure.

4. Procédé selon l'une quelconque des revendications précédentes, dans lequel l'étape de coagulation est réalisée à une température de 30 à 45 °C pendant 15 à 60 minutes.

5. Procédé selon l'une quelconque des revendications précédentes, dans lequel l'étape de chauffage est réalisée pendant 5 à 180 minutes.

6. Procédé selon l'une quelconque des revendications précédentes, dans lequel un liquide est ajouté au mélange caillé au cours de l'étape de chauffage, dans lequel le liquide est de l'eau, un lactosérum de fromage, un perméat obtenu à partir d'une filtration sur membrane du lait, tel qu'un perméat d'ultrafiltration, et un mélange de ceux-ci.

7. Procédé selon l'une quelconque des revendications précédentes, dans lequel la matière première est soumise à un traitement thermique.

8. Procédé selon l'une quelconque des revendications précédentes, dans lequel la matière première est un concentré de caséine.

9. Procédé selon l'une quelconque des revendications précédentes, dans lequel du sel est ajouté à la matière première.

10. Procédé selon l'une quelconque des revendications précédentes, dans lequel le sel est ajouté avant le conditionnement des grains de fromage.

11. Procédé selon l'une quelconque des revendications précédentes, comprenant en outre une étape de refroidissement après l'étape de chauffage ou après la séparation du lactosérum ou les deux.

12. Procédé selon la revendication 11, dans lequel le mélange caillé chauffé est refroidi à une température de 30 °C à 55 °C après la séparation du lactosérum.

13. Procédé selon l'une quelconque des revendications précédentes, dans lequel une enzyme de réticulation des protéines, telle qu'une transglutaminase, en une quantité de 0,2 à 10 U d'enzyme/g de protéine, en particulier de 3 U d'enzyme/g de protéine, est ajoutée au mélange caillé avant l'étape de chauffage.

14. Procédé selon l'une quelconque des revendications précédentes, dans lequel une enzyme de réticulation des protéines, telle qu'une transglutaminase, en une quantité de 0,2 à 10 U d'enzyme/g de protéine, en particulier de 3 U d'enzyme/g de protéine, est ajoutée aux grains de fromage.
